Europäisches Patentamt

European Patent Office

Office européen des brevets

(11) Publication number: **0 265 564**
**A1**

## (12) EUROPEAN PATENT APPLICATION

(21) Application number: 86308485.1

(22) Date of filing: 30.10.86

(51) Int. Cl.⁴ **E06B 9/266**

(43) Date of publication of application:
04.05.88 Bulletin 88/18

(84) Designated Contracting States:
AT BE CH DE ES FR GR IT LI LU NL SE

(71) Applicant: TEH YOR INDUSTRIAL CO. LTD.
2F, 129, Sec.1 Chung Shan N. Road
Taipei(TW)

(72) Inventor: Huang, Chung-Chen
2F, 129, Sec.1 Chung Shan N. Road
Taipei(TW)

(74) Representative: King, James Bertram
Kings Patent Agency Limited Wardrobe
Court 146a Queen Victoria Street
London EC4V 5AT(GB)

(54) Apparatus to trim an assembled venetian blind to a given length.

(57) A length trimming machine for venetian blinds, the machine comprising a base (1) with upstanding blind supports (4,5,6 & 7) having movable blind support fingers (16). A slat lifter (18) on each support (4 to 7) with movable lifting fingers (23). Means (24,25,26 & 27) to raise and lower the lifters (18). A slat trimming assembly (28) including a slat trimming blade pair (29,32). Means to move and operate the members in a predetermined cycle in which the slat trimming assembly (28) is aligned with slats to be trimmed, the trimming blades (29,32) are actuated when they are in the correct relationship with the slats, and the slat lifters (18) are raised after a slat trimming operation and the slat lifter fingers (23) place trimmed slats on the support fingers (16).

FIG. 1.

# "APPARATUS TO TRIM AN ASSEMBLED VENETIAN BLIND TO A GIVEN LENGTH"

This invention provides a machine for trimming the ends of assembled venetian type blinds. Venetian blinds are comprised of a head rail, a bottom rail and slats supported by cross members of ladder tapes fixed at their ends to the head and bottom rails. Cords fixed to the bottom rail and passing through slots in the slats are passed over pulleys in the head rail. By pulling on the cords the slats are gathered together as the bottom rail is lifted to the head rail.

At this time venetian blinds are made up in quantity for supply to persons with standard width windows. If a person requires a venetian blind for a non-standard width window it has to be made as a special order with the head and bottom rails and slats being made to the correct lengths and then assembled with ladder tapes and cords. This prevents the sale of non-standard width venetian blinds in retail stores. Hereinafter blind length means blind width.

This invention has been made so that a retail store which holds a range of assembled venetian blinds of different lengths can trim unwanted length from a blind to provide a customer's length requirement. A possible range would provide a 150mm difference between blind lengths with the cord pulleys and ladder tapes located no closer than 150 mms from each end of the blind. If the maximum 150mms was cut from a blind, say 75mms from each end of the blind, then there would still be an acceptable distance of 75mms between the ends of the blind and the ladder tapes.

Broadly the invention can be said to comprise a length trimming machine for an assembled venetian blind comprising at least a head rail and slats supported in ladder tapes fixed to the head rail; the machine comprising a base member, a number of blind supports upstanding from the base member, retractable support fingers on the blind supports to mount the head rail of a venetian blind in a generally horizontal plane with at least the slats adjacent the head rail in their open position, a slat lifter mounted for vertical sliding movement on each support, retractable lifting fingers on each slat lifter, slat lifter moving means to raise the slat lifters to an elevation where the lifting fingers are above the support fingers and to lower the slat lifters to a rest position where the lifting fingers are a predetermined distance below the support fingers, a slat trimming assembly including a pair of slat trimming blades, means to move the trimming blades one relative to the other, and means to cyclically move the slat trimming assembly vertically into horizontal alignment with selected slats of a blind when mounted on the support fingers and to move the slat trimming assembly horizontally into slat trimming relationship with the slats of a blind when mounted on the support fingers, the vertical and horizontal movements being in timed relationship with the operation of the slat lifters and the operation of the cutter blades.

A presently preferred embodiment of the invention will now be described with reference to the accompanying drawings in which :-

Fig.1 is a perspective view of the preferred embodiment of the machine of the invention,

Fig.2 is an enlarged fragmentary view of some of the components of the machine in Fig.1,

Fig.3 is an enlarged perspective view of the cutter blades of the slat trimming assembly of the machine,

Fig.4 is a fragmentary end view in the direction of the arrow 4 of Fig.1 looking into the attachment of the machine to cut the head and bottom rail of a blind to length,

Fig.5 is a fragmentary view on the section line 5 - 5 of Fig.4,

Fig. 6 is a diagrammatic end view of part of an assembled blind showing the relative positions of the blind slats and the cutters of the slat trimming assembly when it is in the rest position aligned with the first blind slat,

Fig.7 is a view similar to Fig.6 showing the trimming assembly aligned with the second slat to be trimmed after having trimmed the first slat,

Fig.8 is a view similar to Fig.7 but with the trimming assembly lowered to its wait position, and

Fig.9 is a view showing the first and second slats of the blind elevated after trimming and the trimming assembly in the wait position and aligned with the third slat of the blind.

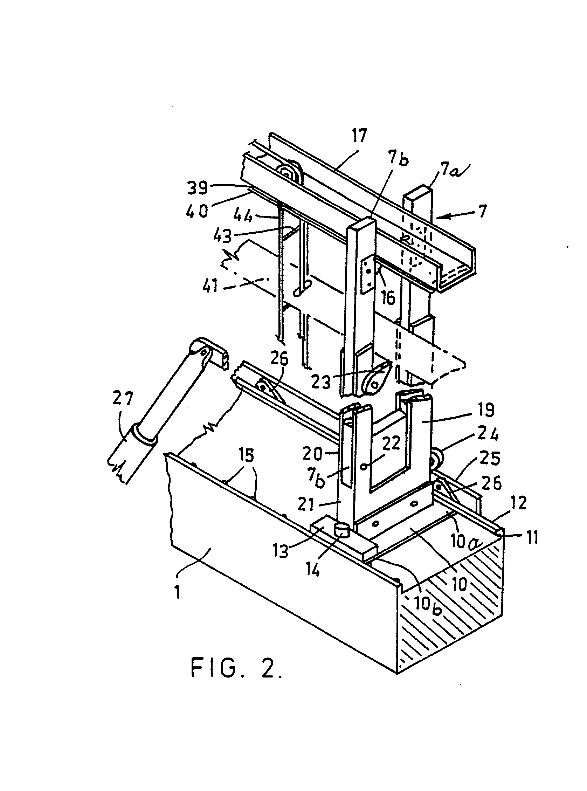

The machine as illustrated comprises a base having a bed 1 and two supporting legs 2 and 3. The leg 2 houses power and control mechanisms for the machine to enable the operation of the machine in the manner to be described. Mounted on bed 1 there are upstanding supports 4,5,6 and 7. The supports have foot portions 10 and, as will be best seen in Fig.2, the foot portions 10 have extended lugs 10a to engage in the groove 11 in the upstanding back rail 12 of the bed and forwardly extending lugs 10b over which there is placed clamping blocks 13 with clamping screws 14 which can be screwed into threaded holes of a row of holes 15 in the bed 1 to position the supports where required along the length of the bed.

The supports 4 to 7 are respectively comprised of two legs 4a and 4b, 5a and 5b, 6a and 6b and 7a and 7b. The legs are provided with elongated slots 8, to be seen on the leg 5b, from which parts to be described have been removed to facilitate the understanding of the invention. Inset into each of the legs there is a pivotally mounted finger 16 to support the top rail 17 of a blind to be trimmed to length, see Fig.2, and which will support the slats of the blind after they are trimmed and are raised onto the fingers 16, as will be understood from the following description. The fingers 16 are made to be gravitationally biassed to the lowered support position shown, and so as to deflect upwardly when slats are moved upwardly past the fingers, as will be understood from the following description.

Slidably mounted on each support (but not shown on the support 5) there is a lifter 18 comprised of two U shaped plates 19 and 20 joined at 21. The lifters 18 have guide pins 22 engaged in the slots 8. On each lifter there are fingers 23 which are gravitationally biassed to the lowered support position where they underlie a blind slat, the fingers are used to lift slats to a position above the fingers 16 and then to lower the slats onto the fingers 16. The fingers 23 will deflect to allow a slat to pass by the fingers as the lifters are lowered relative to the slats.

Extending to the rear of each lifter 18 and fixed thereto there is a roller 24 which bears on a bar 25 connected by links 26 to the bed 1. The bar 25 is connected to the piston rod a hydraulic or air operated cylinder 27 and it is clear that as the piston is moved outwardly in the cylinder 27 the links 26 will raise the bar 25 which will raise the rollers 24 and the lifters connected thereto.

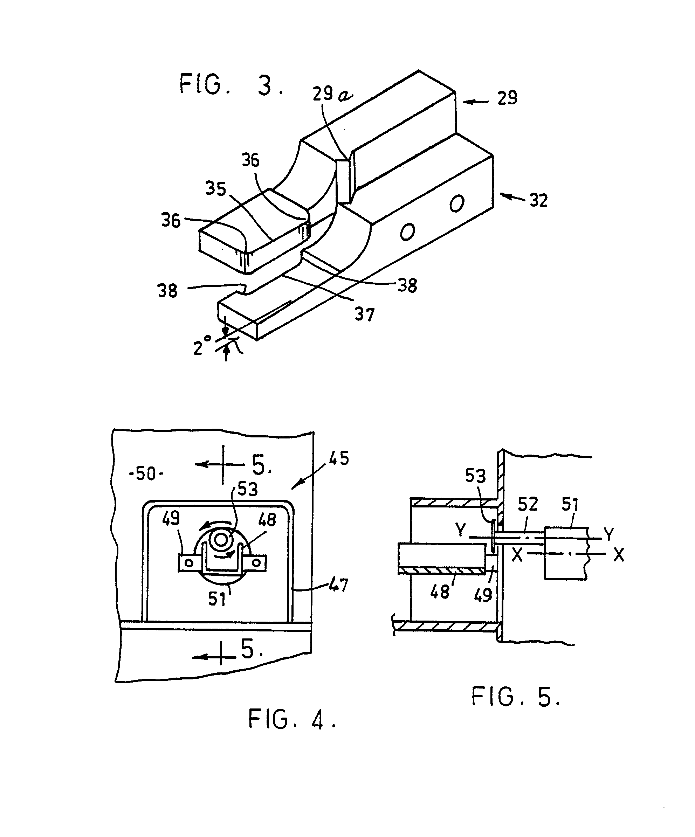

Mounted on the supporting leg 2 there is a movable slat trimming assembly 28 including a scissor-like blade combination with a non-moving blade 29 fixed to a bearing block 30 having an arm 31 connected to a trimming assembly moving mechanism in the leg 2. There is a moving blade 32 on a column 34 slidable in the bearing block 30. Looking as the blades in Fig.3 it will be seen that the non-moving blade 29 has a guide rib 29a which is engaged in a correspondingly shaped groove 32a in the blade 32. The cutting part of the blade 29 comprises a cutting edge 35 with rounded corners 36 and the blade 32 has a similarly shaped notch 37 with rounded corners 38. This provides the required end shape for trimmed slats. It is to be noted that the top face 39 of the blade 32 is angled at 2 degrees (which angle can be varied) to the underface of the blade 29 to give a shearing scissor-like action as the cutting edges 35-36 pass through the notch 37-38 as the blade 32 moves up and down relative to the blade 29.

In a working sequence to trim the ends of the venetian blind slats the blind head rail 17 is positioned on the fingers 16 and the blind slats are allowed to drop freely between the support legs 4a & b, 5a & b, 6a & b and 7a & b with at least the first slat 39, the second slat 40, the third slat 41 and the fourth slat 42 suspended below the head rail 17 with the normal spacing therebetween. There are other slats but these will not be particularly identified for reasons that will be clear from the following description. The trimming position on the blind slats is aligned with the trimming assembly by sliding the blind head rail 17 on the fingers 16.

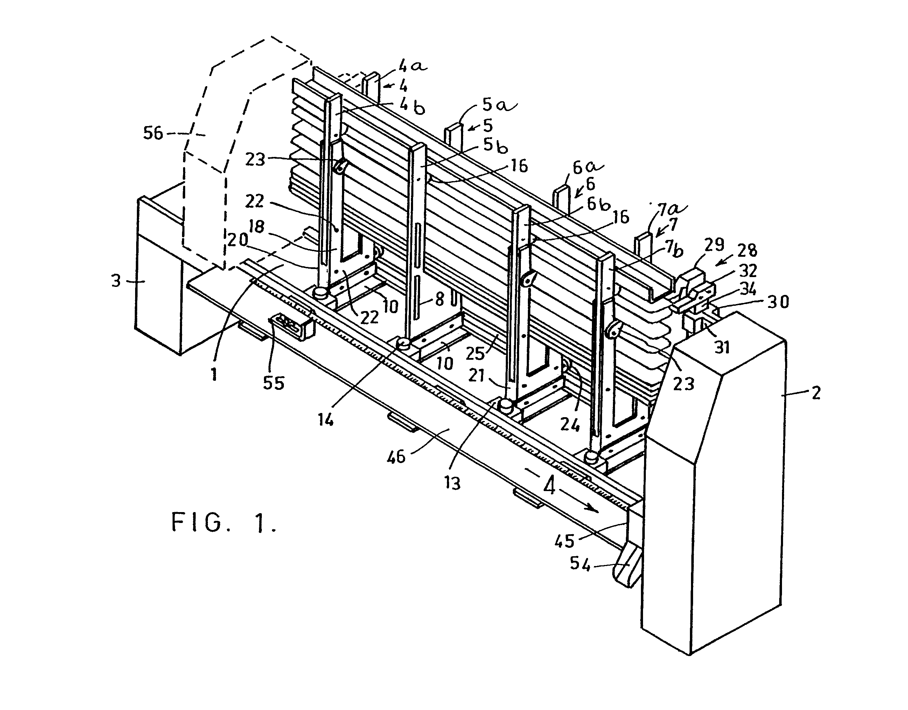

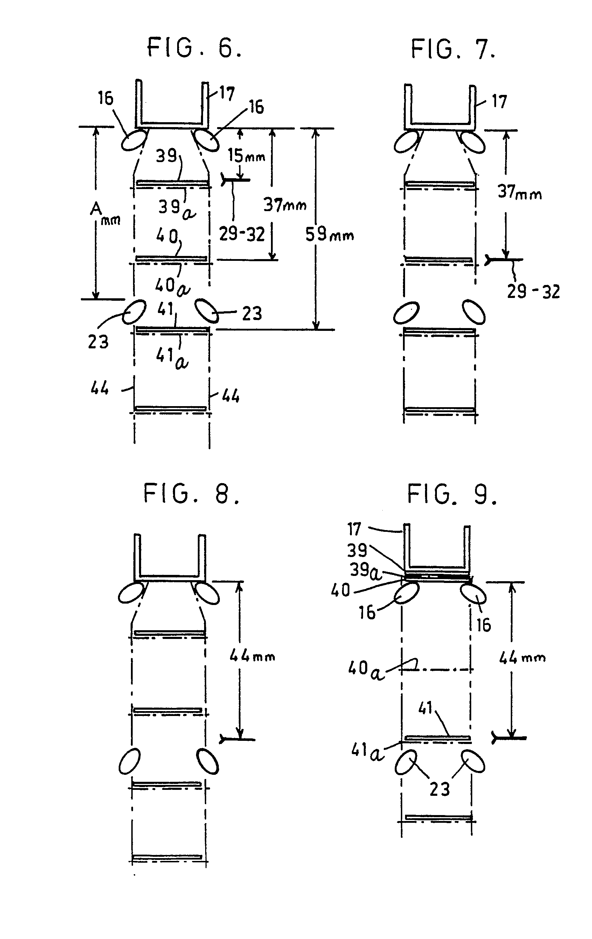

Initially the trimming assembly is in a rest position at the elevation of the slat 39 and to the rear of the slats, see Fig.1 and Fig.6. By means of a mechanism within the leg 2, details of which are not part of this invention and are therefore not described herein, the trimming assembly is caused to follow a pattern of movements as now to be described and then return to the rest position.

It is to be noted from Fig.6 that the tops of the fingers 23 are at a distance A from the tops of the fingers 16 and this places the tops of the fingers 23 between slats 40 and 41 and closer to slat 41. It will also be noted from Fig.2 that the ladder tape is of the type comprising a pair of robust vertical cords 43 joined by fine slat cords 44 and the slats rest upon the top of the slat cords 44.

In its first movement the trimming assembly with the blades separated moves forwardly from the rest position aligned with the slat 39 and by means of the mechanism within the leg 2 trims the unwanted length from the end of the slat 39 by upward movement of the blade 32. The blade 32 is then lowered and the trimming assembly is moved back to the rest position. The trimming assembly is then lowered to its second position (Fig.7) where the blades 29-32 are aligned with the slat 40. As before the trimming assembly is moved forwardly and the end of the slat 40 is trimmed and the trimming assembly moves back to the second position. The trimming assembly is then lowered again to take up its wait position, see Fig.8, where the wait position is shown as A from the tops of the fingers 16. For convenience of understanding the vertical distances of the slats, the trimming assembly blades and the fingers 23 from the tops of the fingers 16 will be given specific values in mms. It is to be understood that these values can be different for different types of blind but they are representative for one type of blind and serve to illustrate the theory behind the invention.

The piston in the cylinder 27 is now extended to raise the bar 25 and the lifters and the lifter fingers 23. The slats 39 and 40 are gathered together by the rising fingers 23 and are raised to an elevation above the fingers 16 which retract to allow the slats 39 and 40 to pass. The head rail 17 is raised by the slats. After the slat 40 passes the fingers 16 they gravitationally return to the extended position. The piston is then withdrawn into the cylinder 27, the bar 25 lowers the lifters and the slats 39-40 with the head 17 resting thereon are lowered onto the fingers 16 as can be seen in Fig.9.

As will be seen from Fig.8, because the slat 40 rests on the slat cord 40a it will be raised off the cord 44a by the fingers 23 and will engage the cord 39a and the combination 39, 39a and 40 will be raised to rest on the fingers 16. This means that the cord 39a is raised 15mms and therefore the cord 41a rises 15mms and the slat 41 thereon rises 15mms. By reference to the distances given the slat 41 is now at a distance from the tops of the fingers 16 (allowing for the thickness of the cord 39a to be very small) approximately 44mms, that is (59 - 15)mms. It will now be seen why the blades are positioned in the wait position at the distance A below the tops of the fingers 16.

The mechanism controlling the operation of the machine functions will detect the retraction of the piston in the cylinder 27 and the lowering of the lifters to the position where the fingers 23 are below the slat 41. The trimming assembly will then be advanced, the slat trimming operation and the slat lifting operation as described above will be repeated again and again until all of the slats have been cut. The number of trimming sequences can be contolled manually or by a memory controller set to the number of cuts required, related to the number of slats in the blind. After all cuts have been completed the trimming assembly will automatically rise to the rest position where it will remain until the operating sequence is initiated by the operator when the other end of the blind is set up for trimming or another blind is set up for trimming.

After the slats are trimmed to length the head rail and bottom rails need to be trimmed to length. The trimming of the head and bottom rails is preformed manually or by an attachment on the machine. In a preferred arrangement the trimming is preformed in a trimming attachment 45 on the machine leg 2, see Fig.1. There is a table 46 at the front of the machine aligned with the trimming attachment 45 but at an elevation below the trimming attachment 45. Looking at Fig.4, which is a view in the direction of the arrow 4 of Fig.1, the trimming attachment includes a safety cover 47 and a channel shaped support 48 within the cover with arms 49 fixed to the face 50 of the machine leg 2. The support 48 is positioned relative to a cutter assembly comprised of a rotatable holder 51 which rotates about the axis X-X and in the holder 51 there is rotatably supported a shaft 52 which is rotatable about the axis Y-Y and a saw blade 53 is fixed to the shaft 52. A suitable drive means is provided for the cutter assmebly within the machine leg 2 to give fast rotation of the cutter shaft 52 with the blade 53 and slow rotation of the holder 51. The holder 51 after each revolution comes to rest as shown in Fig.4 with the blade 53 at the position shown.

Prior to performing a trimming operation an adjustable stop 55 on the table 46 is positioned a correct distance from the blade 53. The blind is placed on the table 46 and the end of the blind head rail 17 (or its bottom rail) to be trimmed off to alignment with the trimmed ends of the slats is placed in the support 48. The ends of the slats at the other end of blind are pushed against the stop 55. This will place the blade 53 at the correct cutting position relative to the rail end to be cut and the blind is held firmly in this position whilst the head rail end is trimmed.

As will be understood when the holder 51 turns the shaft 47 will follow a circular path about the axis of rotation of the holder 51. Fig.4 shows that under such conditions the outer edge of the rapidly spinning blade 53 will follow a path which will cut through the sides and bottom of a head rail lying in the support 48 and sever the part of the rail projecting beyond the blade 53. The cut-off portion will discharge down the chute 54 shown in Fig.1 In this way the head and/or bottom rail can be made the same length as the slats or longer or shorter as the operator requires simply by adjusting the position of the stop 55.

As illustrated the operations are performed on one end of the blind at a time. By duplicating the trimming assembly on a drive head adjustably mounted on the bed, as shown in dotted outline and indicated 56, both ends of a blind could be trimmed at the one time. The ends of the rails could then be trimmed to length one at a time as described above.

**Claims**

1. A length trimming machine for an assembled venetian blind comprising at least a head rail and slats supported in ladder tapes fixed to the head rail; the machine comprising a base member, a number of blind supports upstanding from the base member, retractable support fingers on the blind supports to mount the head rail of a venetian blind in a generally horizontal plane with at least the slats adjacent the head rail in their open position, a slat lifter mounted for vertical sliding movement on each support, retractable lifting fingers on each slat lifter, slat lifter moving means to raise the slat lifters to an elevation where the lifting fingers are above the support fingers and to lower the slat lifters to a rest position where the lifting fingers are a predetermined distance below the support fingers, a slat trimming assembly including a pair of slat trimming blades, means to move the trimming blades one relative to the other, and means to cyclically move the slat trimming assembly vertically into horizontal alignment with selected slats of a blind when mounted on the support fingers and to move the slat trimming assembly horizontally into slat trimming relationship with the slats of a blind when mounted on the support fingers, the vertical and horizontal movements being in timed relationship with the operation of the slat lifters and the operation of the cutter blades.

2. A length trimming machine as claimed in claim 1 wherein the cycle of movements for the slat trimming assembly comprises a horizontal movement to a first cut position from a first slat position where the trimming blades lie to one side of the vertical plane that will be occupied by an open venetian blind when mounted on the support fingers and where the trimming blades lie in horizontal alignment with the uppermost (first) slat of the venetian blind, in the first cut position the blades will be in cutting relationship with the first blind slat, followed by the return of the slat trimming assembly to the first slat position, followed by a downward movement to a second slat position below the first slat position where the blades will be aligned with the second slat of the blind, followed by a forward horizontal movement to a second cut position where the blades will be in cutting relationship with the second blind slat and then return to the second slat position, followed by a downward movement to a position horizontally aligned with the lifting fingers with the slat lifter is in its rest position, and after a required number of horizontal movements in that position into and out of alignment with the third and subsequent blind slats to be cut the slat trimming assembly is moved upwardly to the first slat position ready for a second cycle of movements.

3. A length trimming machine as claimed in claim 2 wherein the slat lifters are activated after the trimming of the second slat of the venetian blind and after the trimming of each subsequent blind slat.

4. A length trimming machine as claimed in claim 1 wherein the blind supports each comprise a pair of upstanding legs spaced apart sufficiently to allow a venetian blind to pass therebetween and aligned on the base members so a venetian blind can be cradled between the legs of all of the supports on the the support fingers which project inwardly from the support legs, the slat lifters each comprise legs adapted for sliding movement on the support legs and the lifting fingers project inwardly from the lifter legs.

5. A length trimming machine as claimed in 4 wherein the slat lifter moving means comprises a bar connected by equal length links to the base member and bar engaging members fixed to the slat lifters, and means to raise and lower the bar.

6. A length trimming machine as claimed in claim 1 wherein the blind supports are adjustable as to position along the base member.

FIG. 1.

0 265 564

FIG. 2.

FIG. 3.

29 a

36

35

36

38

38

37

29

32

2°

-50-

5.

53

49

48

51

45

47

5.

FIG. 4.

53

52

51

Y

Y

X

X

48

49

FIG. 5.

FIG. 6.

FIG. 7.

FIG. 8.

FIG. 9.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 227 305 (J.C. NEWMAN)<br>* Figure 1; column 1, lines 16-24,39-54 * | 1 | E 06 B    9/266 |
| | --- | | |
| A | DE-A-1 602 520 (S.A. NILSSON) | | |
| | --- | | |
| A | EP-A-0 100 154 (HUNTER DOUGLAS INDUSTRIES) | | |
| | ----- | | |

TECHNICAL FIELDS
SEARCHED (Int Cl 4)

E 06 B
B 26 D

The present search report has been drawn up for all claims

| Place of search | Date of completion of the search | Examiner |
|---|---|---|
| THE HAGUE | 26-06-1987 | SCHEIBLING C.D.A. |